(19) Europäisches Patentamt
European Patent Office
Office européen des brevets

(11) **EP 4 358 173 A1**

(12) **EUROPEAN PATENT APPLICATION**
published in accordance with Art. 153(4) EPC

(43) Date of publication:
**24.04.2024 Bulletin 2024/17**

(21) Application number: **22824555.1**

(22) Date of filing: **10.03.2022**

(51) International Patent Classification (IPC):
$H01M\ 4/13^{(2010.01)}$        $H01M\ 4/131^{(2010.01)}$
$H01M\ 4/485^{(2010.01)}$        $H01M\ 4/62^{(2006.01)}$

(52) Cooperative Patent Classification (CPC):
**H01M 4/13; H01M 4/131; H01M 4/485; H01M 4/62;**
Y02E 60/10

(86) International application number:
**PCT/JP2022/010447**

(87) International publication number:
**WO 2022/264555 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 16.06.2021   JP 2021100338
16.06.2021   JP 2021100339
01.02.2022   JP 2022014258

(71) Applicant: **Panasonic Intellectual Property
Management Co., Ltd.**
**Osaka-shi, Osaka 540-6207 (JP)**

(72) Inventors:
• **UEMATSU, Masayoshi**
**Kadoma-shi, Osaka 571-0057 (JP)**
• **SAGARA, Akihiko**
**Kadoma-shi, Osaka 571-0057 (JP)**
• **ASANO, Hiroshi**
**Kadoma-shi, Osaka 571-0057 (JP)**
• **KUSUMOTO, Shohei**
**Kadoma-shi, Osaka 571-0057 (JP)**
• **WADA, Tomokatsu**
**Kadoma-shi, Osaka 571-0057 (JP)**

(74) Representative: **Grünecker Patent- und
Rechtsanwälte
PartG mbB
Leopoldstraße 4
80802 München (DE)**

(54) **ELECTRODE MATERIAL AND BATTERY**

(57)     An electrode material includes an active material particle and a solid electrolyte particle. The solid electrolyte particle includes Li, M, and X, wherein M is at least one selected from the group consisting of metal elements excluding Li and metalloid elements, and X is at least one selected from the group consisting of F, Cl, Br, and I. The ratio R1 of the volume of the active material particle to the sum of the volume of the active material particle and the volume of the solid electrolyte particle is greater than or equal to 10% and less than 65% when expressed as percentage. The ratio R2 of the average particle diameter of the active material particle to the average particle diameter of the solid electrolyte particle is greater than or equal to 0.5 and less than or equal to 3.4.

FIG. 1

EP 4 358 173 A1

## Description

Technical Field

The present disclosure relates to an electrode material and a battery.

Background Art

NPL 1 discloses an electrode including an active material and a solid electrolyte. In NPL 1, as the solid electrolyte, a sulfide solid electrolyte $Li_2SP_2S_5$ is used.

Citation List

Non Patent Literature

NPL 1: Gerbrand Ceder et al, "High Active Material Loading in A ll-Solid-State Battery Electrode via Particle Size Optimization", Adv. Energy Mater., 2020, Vol. 10, p. 1902881.

Summary of Invention

Technical Problem

It is an object of the present disclosure to provide an electrode material that is suitable for improving battery input-output characteristics.

Solution to Problem

The electrode material in one aspect of the present disclosure includes:

an active material particle; and
a solid electrolyte particle, wherein
the solid electrolyte particle includes Li, M, and X,
M is at least one selected from the group consisting of metal elements excluding Li and metalloid elements,
X is at least one selected from the group consisting of F, Cl, Br, and I,
the ratio R1 of the volume of the active material particle to the sum of the volume of the active material particle and the volume of the solid electrolyte particle is greater than or equal to 10% and less than 65% when expressed as percentage, and
the ratio R2 of the average particle diameter of the active material particle to the average particle diameter of the solid electrolyte particle is greater than or equal to 0.5 and less than or equal to 3.4.

Advantageous Effects of Invention

The present disclosure provides an electrode material that is suitable for improving battery input-output characteristics.

Brief Description of Drawings

[Fig. 1] Fig. 1 is a schematic view of an electrode material according to Embodiment 1.
[Fig. 2] Fig. 2 is a cross-sectional view of a battery according to Embodiment 2
[Fig. 3] Fig. 3 is a schematic view of compression molding dies used for evaluating the ion conductivity of solid electrolyte particles.
[Fig. 4] Fig. 4 is a graph showing a relationship between the average particle diameter and the ion conductivity of solid electrolyte particles produced in Examples 1 to 4.
[Fig. 5] Fig. 5 is a graph showing a relationship between the ratio of the average particle diameter of the active material particle to the average particle diameter of the solid electrolyte particle and the ratio of the charging capacity at 385 $\mu$A to the charging capacity at 65 $\mu$A in Examples 1 to 4 and Comparative Examples 1 to 3.

[Fig. 6] Fig. 6 is a graph showing a relationship between the average particle diameter and the ion conductivity of the solid electrolyte particles produced in Examples 5 to 8.

[Fig. 7] Fig. 7 is a graph showing a relationship between the ratio of the average particle diameter of the active material particle to the average particle diameter of the solid electrolyte particle and the ratio of the charging capacity at 385 $\mu$A to the charging capacity at 65 $\mu$A in Examples 5 to 8 and Comparative Examples 1 to 3.

Description of Embodiments

(Underlying Knowledge Forming Basis of the Present Disclosure)

NPL 1 discloses that in a combination of an active material and a solid electrolyte constituted of specific materials, when the ratio of the average particle diameter of the active material to the average particle diameter of the solid electrolyte is sufficiently large, the usage ratio of the active material is improved. However, according to the study by the present inventors, when a halide solid electrolyte is used as the solid electrolyte, the ion conductivity of the solid electrolyte tends to largely decrease with the increase in the average particle diameter of the solid electrolyte. In a battery using an electrode material having decreased ion conductivity of the solid electrolyte, the resistance tends to be high. Thus, when a halide solid electrolyte is used, the battery input-output characteristics tend to deteriorate by simply decreasing the average particle diameter of the solid electrolyte for increasing the above-mentioned ratio.

(Overview of one aspect of the present disclosure)

The electrode material according to a 1st aspect of the present disclosure includes:

an active material particle; and
a solid electrolyte particle, wherein
the solid electrolyte particle includes Li, M, and X,
M is at least one selected from the group consisting of metal elements excluding Li and metalloid elements,
X is at least one selected from the group consisting of F, Cl, Br, and I,
the ratio R1 of the volume of the active material particle to the sum of the volume of the active material particle and the volume of the solid electrolyte particle is greater than or equal to 10% and less than 65% when expressed as percentage, and
the ratio R2 of the average particle diameter of the active material particle to the average particle diameter of the solid electrolyte particle is greater than or equal to 0.5 and less than or equal to 3.4.

According to the 1st aspect, in the active material particle and the solid electrolyte particle in the electrode material, the ratio R1 of the volume and the ratio R2 of the average particle diameter are appropriately adjusted. When the ratio R1 and the ratio R2 are appropriately adjusted, in a battery using this electrode material, the input-output characteristics tend to be improved. According to this electrode material, even when the average particle diameter of the solid electrolyte is decreased, the resistance in the battery can be prevented from increasing.

In a 2nd aspect of the present disclosure, for example, in the electrode material according to the 1st aspect, the ratio R1 may be greater than or equal to 40% and less than 65%, and the ratio R2 may be greater than or equal to 0.7 and less than or equal to 3.4.

According to the 2nd aspect, in the active material particle and the solid electrolyte particle in the electrode material, the ratio R1 of the volume and the ratio R2 of the average particle diameter are appropriately adjusted. When the ratio R1 and the ratio R2 are appropriately adjusted, in a battery using this electrode material, the input-output characteristics tend to be improved. According to this electrode material, even when the average particle diameter of the solid electrolyte is decreased, the resistance in the battery can be prevented from increasing.

In a 3rd aspect of the present disclosure, for example, in the electrode material according to the 1st or 2nd aspect, the ratio R1 may be greater than or equal to 55% and less than 65%.

According to the 3rd aspect, when the ratio R1 is greater than or equal to 55%, there is a tendency that a battery using this electrode material can sufficiently secure the energy density. When the ratio R1 is less than 65%, the battery can operate at high input and output.

In a 4th aspect of the present disclosure, for example, in the electrode material according to any one of the 1st to 3rd aspects, the ratio R2 may be greater than or equal to 1.50 and less than or equal to 2.90.

According to the 4th aspect, when the ratio R2 is greater than or equal to 1.50, the contact area between the active material particle and the solid electrolyte particle can be sufficiently secured. When the ratio R2 is less than or equal to 2.90, the decrease in the ion conductivity can be suppressed by suppressing the increase in the resistance at the grain boundary. A battery using this electrode material can operate at high input and output.

In a 5th aspect of the present disclosure, for example, in the electrode material according to any one of the 1st to 4th aspects, the average particle diameter of the solid electrolyte particle may be less than or equal to 1.41 $\mu$m.

In a 6th aspect of the present disclosure, for example, in the electrode material according to any one of the 1st to 5th aspects, the average particle diameter of the solid electrolyte particle may be less than or equal to 1.2 $\mu$m.

In a 7th aspect of the present disclosure, for example, in the electrode material according to any one of the 1st to 6th aspects, the average particle diameter of the solid electrolyte particle may be greater than or equal to 0.3 $\mu$m and less than or equal to 1.2 $\mu$m.

According to the 5th to 7th aspects, the solid electrolyte particle tends to have high ion conductivity.

In an 8th aspect of the present disclosure, for example, in the electrode material according to any one of the 1st to 7th aspects, the average particle diameter of the active material particle may be less than or equal to 5.0 $\mu$m.

In a 9th aspect of the present disclosure, for example, in the electrode material according to any one of the 1st to 8th aspects, the average particle diameter of the active material particle may be less than or equal to 2.5 $\mu$m.

According to the 8th or 9th aspect, the decrease in the lithium diffusion speed inside the active material particle can be suppressed. Accordingly, a battery using this electrode material can operate at high output.

In a 10th aspect of the present disclosure, for example, in the electrode material according to any one of the 1st to 9th aspects, the solid electrolyte particle may be represented by the following Formula (1):

$$Li_\alpha M_\beta X_\gamma \qquad \text{Formula (1)}$$

in Formula (1) above, $\alpha$, $\beta$, and $\gamma$ are each independently a value greater than 0.

In an 11th aspect of the present disclosure, for example, in the electrode material according to any one of the 1st to 10th aspects, the M may include Y.

In a 12th aspect of the present disclosure, for example, in the electrode material according to any one of the 1st to 11th aspects, the solid electrolyte particle may include $Li_3YBr_2Cl_4$.

In a 13th aspect of the present disclosure, for example, in the electrode material according to any one of the 1st to 12th aspects, the solid electrolyte particle may be substantially free from sulfur.

In a 14th aspect of the present disclosure, for example, in the electrode material according to any one of the 1st to 13th aspects, the active material particle may include Li, Ti, and O.

In a 15th aspect of the present disclosure, for example, in the electrode material according to any one of the 1st to 14th aspects, the active material particle may include a lithium titanium oxide.

In a 16th aspect of the present disclosure, for example, in the electrode material according to any one of the 1st to 15th aspects, the active material particle may include $Li_4Ti_5O_{12}$.

According to the 10th to 16th aspects, the electrode material is suitable for improving the battery input-output characteristics.

The battery according to a 17th aspect of the present disclosure includes:

a positive electrode;
a negative electrode; and
an electrolyte layer located between the positive electrode and the negative electrode, wherein
at least one selected from the group consisting of the positive electrode and the negative electrode includes the electrode material according to any one of the 1st to 16th aspects.

According to the 17th aspect, the battery input-output characteristics tend to be improved.

The electrode material according to an 18th aspect of the present disclosure includes:

an active material particle; and
a solid electrolyte particle, wherein
the solid electrolyte particle includes Li, M, and X,
M is at least one selected from the group consisting of metal elements excluding Li and metalloid elements,
X is at least one selected from the group consisting of F, Cl, Br, and I,
the ratio R1 of the volume of the active material particle to the sum of the volume of the active material particle and the volume of the solid electrolyte particle is greater than or equal to 10% and less than 40% when expressed as percentage, and
the ratio R2 of the average particle diameter of the active material particle to the average particle diameter of the solid electrolyte particle is greater than or equal to 0.5 and less than or equal to 3.4.

According to the 18th aspect, in the active material particle and the solid electrolyte particle in the electrode material, the ratio R1 of the volume and the ratio R2 of the average particle diameter are appropriately adjusted. When the ratio R1 and the ratio R2 are appropriately adjusted, in a battery using this electrode material, the input-output characteristics tend to be improved. According to this electrode material, even when the average particle diameter of the solid electrolyte is decreased, the resistance in the battery can be prevented from increasing.

In a 19th aspect of the present disclosure, for example, in the electrode material according to the 18th aspect, the ratio R1 may be greater than or equal to 20% and less than or equal to 30%.

According to the 19th aspect, when the ratio R1 is greater than or equal to 20%, there is a tendency of sufficiently securing the energy density of a battery using this electrode material. When the ratio R1 is less than or equal to 30%, the battery can operate at high input and output.

In a 20th aspect of the present disclosure, for example, in the electrode material according to the 18th or 19th aspect, the ratio R2 may be greater than or equal to 0.71 and less than or equal to 1.69.

According to the 20th aspect, when the ratio R2 is greater than or equal to 0.71, the contact area between the active material particle and the solid electrolyte particle can be sufficiently secured. When the ratio R2 is less than or equal to 1.69, the decrease in the ion conductivity can be suppressed by suppressing the increase in the resistance at the grain boundary. A battery using this electrode material can operate at high input and output.

In a 21st aspect of the present disclosure, for example, in the electrode material according to the 18th to 20th aspects, the average particle diameter of the solid electrolyte particle may be greater than or equal to 0.3 $\mu$m and less than or equal to 1.41 $\mu$m.

In a 22nd aspect of the present disclosure, for example, in the electrode material according to any one of the 18th to 21st aspects, the average particle diameter of the solid electrolyte particle may be greater than or equal to 0.59 $\mu$m and less than or equal to 1.41 $\mu$m.

According to the 21st or 22nd aspect, the solid electrolyte particle tends to have high ion conductivity.

Embodiments of the present disclosure will now be described with reference to the drawings.

(Embodiment 1)

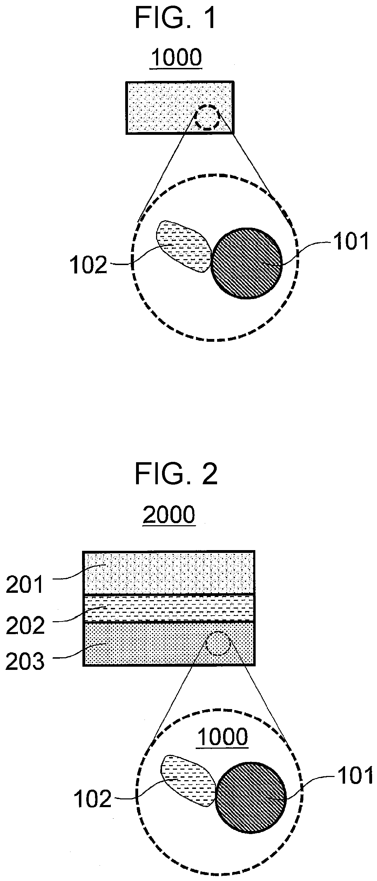

Fig. 1 is a schematic view of an electrode material 1000 according to Embodiment 1. The electrode material 1000 in Embodiment 1 includes an active material particle 101 and a solid electrolyte particle 102. The solid electrolyte particle 102 includes Li, M, and X. M is at least one selected from the group consisting of metal elements excluding Li and metalloid elements. X is at least one selected from the group consisting of F, Cl, Br, and I.

Furthermore, the ratio R1 of the volume V1 of the active material particle 101 to the sum of the volume V1 of the active material particle 101 and the volume V2 of the solid electrolyte particle 102 is greater than or equal to 10% and less than 65% when expressed as percentage. The ratio R2 of the average particle diameter D 1 of the active material particle 101 to the average particle diameter D2 of the solid electrolyte particle 102 is greater than or equal to 0.5 and less than or equal to 3.4.

In the present disclosure, the "metal elements" are (i) all elements in Groups 1 to 12 of the Periodic Table excluding hydrogen and (ii) all elements in Groups 13 to 16 excluding B, Si, Ge, As, Sb, Te, C, N, P, O, S, and Se. That is, the metal elements are a group of elements that can become cations when they form inorganic compounds with halogen compounds.

In the present disclosure, the "metalloid elements" are B, Si, Ge, As, Sb, and Te.

The volume V1 of the active material particle 101 and the volume V2 of the solid electrolyte particle 102 for calculating the ratio R1 can be specified from the active material particle 101 and the solid electrolyte particle 102 that are used as raw materials for producing the electrode material 1000. That is, the total volume of the group of the active material particle 101 that is used as a raw material can be regarded as the volume V1 of the active material particle 101. Similarly, the total volume of the group of the solid electrolyte particle 102 that is used as a raw material can be regarded as the volume V2 of the solid electrolyte particle 102.

The ratio R1 may be specified by the following method. First, a cross section of an electrode material 1000 or an electrode including the electrode material 1000 is observed with a scanning electron microscope (SEM). The cross section of an electrode is a cross section parallel to the thickness direction of the electrode. In the obtained SEM image, for example, the area A1 of all regions where the active material particle 101 is present within a range of 20 $\mu$m in length and 20 $\mu$m in width is specified by image processing. Furthermore, within the range used for the specification of the area A1, the area A2 of all regions where the solid electrolyte particle 102 is present is specified by image processing. The ratio of the area A1 to the sum of the area A1 and the area A2 can be regarded as the ratio R1.

When the ratio R1 is greater than or equal to 10%, there is a tendency of sufficiently securing the energy density of a battery using the electrode material 1000. When the ratio R1 is less than 65%, a battery using the electrode material 1000 can operate at high input and output. The ratio R1 may be greater than or equal to 40% and less than 65% or greater than or equal to 55% and less than 65% when expressed as percentage. The ratio R1 may be less than or equal to 63% or less than or equal to 60%.

The ratio R1 may be greater than or equal to 10% and less than 40% when expressed as percentage in some cases and may be greater than or equal to 20% and less than or equal to 30%. When the ratio R1 is greater than or equal to 20%, there is a tendency of sufficiently securing the energy density of a battery using the electrode material 1000. When the ratio R1 is less than or equal to 30%, a battery using the electrode material 1000 can operate at high input and output.

In the present disclosure, the average particle diameter means the particle diameter at which the accumulated volume in a volume-based particle size distribution is equal to 50%. In the present disclosure, the average particle diameter may be referred to as a median diameter. The volume-based particle size distribution can be determined by a laser diffraction scattering method using a commercially available laser diffraction measurement apparatus. For example, the active material particle 101 that is used as a raw material for producing the electrode material 1000 is subjected to a laser diffraction scattering method, and based on the obtained particle size distribution, the average particle diameter D1 of the active material particle 101 can be specified. Similarly, the solid electrolyte particle 102 that is used as a raw material for producing the electrode material 1000 is subjected to a laser diffraction scattering method, and based on the obtained particle size distribution, the average particle diameter D2 of the solid electrolyte particle 102 can be specified. Based on these average particle diameters D1 and D2, the ratio R2 can be specified.

The ratio R2 may be specified by the following method. First, a cross section of the electrode material 1000 or an electrode including the electrode material 1000 is observed with a scanning electron microscope (SEM). The cross section of an electrode is a cross section parallel to the thickness direction of the electrode. In the obtained SEM image, the area of a specific particle of the active material particle 101 that is discriminable as a particle is calculated by image processing. The diameter of a circle having an area that is the same as that of the calculated area is regarded as the particle diameter of the specific particle of the active material particle 101. The particle diameters of an arbitrary number of particles of the active material particle 101 are calculated respectively, and the average value of the calculated values is regarded as the average particle diameter D1 of the active material particle 101. In the present disclosure, the arbitrary number may be, for example, greater than or equal to 10 or greater than or equal to 50.

Subsequently, in the SEM image, the area of a specific particle of the solid electrolyte particle 102 that is discriminable as a particle is calculated by image processing. The diameter of a circle having an area that is the same as that of the calculated area is regarded as the particle diameter of the specific particle of the solid electrolyte particle 102. The particle diameters of an arbitrary number of particles of the solid electrolyte particle 102 are calculated respectively, and the average value of the calculated values is regarded as the average particle diameter D2 of the solid electrolyte particle 102. Based on the average particle diameters D1 and D2 specified from the SEM image, the ratio R2 can be specified.

The ratio R2 may be greater than or equal to 0.7, greater than or equal to 0.71, greater than or equal to 1.0, or greater than or equal to 1.50. The ratio R2 may be less than or equal to 3.33, less than or equal to 3.0, less than or equal to 2.90, less than or equal to 2.50, less than or equal to 2.0, or less than or equal to 1.69. As an example, the ratio R2 may be greater than or equal to 1.50 and less than or equal to 2.90. As another example, the ratio R2 may be greater than or equal to 0.71 and less than or equal to 1.69. When the ratio R2 is greater than or equal to 0.71, the contact area between the active material particle 101 and the solid electrolyte particle 102 can be sufficiently secured. When the ratio R2 is less than or equal to 3.33, the decrease in the ion conductivity can be sufficiently suppressed by suppressing the increase in the resistance at the grain boundary. A battery of this electrode material 1000 can operate at high input and output.

The average particle diameter D1 of the active material particle 101 is not particularly limited as long as the ratio R2 is greater than or equal to 0.5 and less than or equal to 3.4 and is, for example, less than or equal to 10 $\mu$m and may be less than or equal to 5.0 $\mu$m or less than or equal to 2.5 $\mu$m. The lower limit of the average particle diameter D1 is not particularly limited and is, for example, 0.1 $\mu$m. As an example, the average particle diameter D1 may be greater than or equal to 0.1 $\mu$m and less than or equal to 10 $\mu$m. When the average particle diameter D1 of the active material particle 101 is greater than or equal to 0.1 $\mu$m, the active material particle 101 and the solid electrolyte particle 102 tend to be well dispersed in the electrode material 1000. Consequently, the deterioration of the charge and discharge characteristics of a battery using the electrode material 1000 tends to be suppressed. When the average particle diameter D1 of the active material particle 101 is less than or equal to 10 $\mu$m, the decrease in the lithium diffusion speed inside the active material particle 101 can be suppressed. Accordingly, a battery using the electrode material 1000 can operate at high output.

The average particle diameter D2 of the solid electrolyte particle 102 is not particularly limited as long as the ratio R2 is greater than or equal to 0.5 and less than or equal to 3.4 and is, for example, greater than or equal to 0.1 $\mu$m and may be greater than or equal to 0.3 $\mu$m or greater than or equal to 0.59 $\mu$m. The average particle diameter D2 may be less than or equal to 100 $\mu$m, less than or equal to 10 $\mu$m, less than or equal to 5.0 $\mu$m, less than or equal to 2.0 $\mu$m, less than or equal to 1.41 $\mu$m, less than or equal to 1.2 $\mu$m, less than or equal to 1.0 $\mu$m, less than or equal to 0.8 $\mu$m, or less than or equal to 0.6 $\mu$m. As an example, the average particle diameter D2 may be greater than or equal to 0.1 $\mu$m and less than or equal to 100 $\mu$m, greater than or equal to 0.3 $\mu$m and less than or equal to 1.41 $\mu$m, or greater than or equal to 0.3 $\mu$m and less than or equal to 1.2 $\mu$m. In another example, the average particle diameter D2 may be greater than or equal to 0.59 $\mu$m and less than or equal to 1.41 $\mu$m. When the average particle diameter D2 is greater than or equal to 0.1 $\mu$m and less than or equal to 100 $\mu$m, the solid electrolyte particle 102 is improved in the ion conductivity and can form a good dispersion state with other materials such as the active material particle 101. When the average particle diameter D2 is greater than or equal to 0.3 $\mu$m and less than or equal to 1.41 $\mu$m, the solid electrolyte particle 102 tends to have high ion conductivity.

The average particle diameter D1 of the active material particle 101 may be larger than the average particle diameter D2 of the solid electrolyte particle 102. Consequently, a good dispersion state of the active material particle 101 and the solid electrolyte particle 102 tends to be formed. However, the average particle diameter D1 may be smaller than the average particle diameter D2.

[Active material particle]

The active material particle 101 includes, for example, Li, Ti, and O. The active material particle 101 may include a lithium titanium oxide. The active material particle 101 may include at least one selected from the group consisting of $Li_4Ti_5O_{12}$, $Li_7Ti_5O_{12}$, and $LiTi_2O_4$ or may include $Li_4Ti_5O_{12}$.

The composition of the active material particle 101 is not limited to the above. The active material particle 101 may further include M1. M1 is at least one selected from the group consisting of metal elements excluding Li and Ti and metalloid elements.

The active material particle 101 may include Zr (i.e., zirconium) as M1. The active material particle 101 may be represented by the following Formula (2):

$$Li_4Ti_{5-\alpha}Zr_\alpha O_{12} \qquad \text{Formula (2)}$$

Here, $\alpha$ satisfies $0 < \alpha \le 0.3$.

In Formula (2), $\alpha$ may satisfy $0 < \alpha \le 0.2$ or may satisfy $0.01 \le \alpha \le 0.1$.

The active material particle 101 including Zr may include a compound represented by, for example, a formula of $Li_{a1}Ti_{b1}Zr_{c1}Me1_{d1}O_{e1}$. Here, $a1 + 4b1 + 4c1 + md1 = 2e1$ and $c1 > 0$ are satisfied. Me1 is at least one selected from the group consisting of metal elements excluding Li and Y and metalloid elements, and m is the valence of Me1. As Me1, at least one selected from the group consisting of Mg, Ca, Sr, Ba, Zn, Sc, Al, Ga, Bi, Hf, Sn, Ta, and Nb may be used.

The shape of the active material particle 101 is not particularly limited and may be acicular, spherical, oval spherical, fibrous, or the like.

[Solid electrolyte particle]

As described above, the solid electrolyte particle 102 includes Li, M, and X. The solid electrolyte particle 102 has, for example, a monoclinic crystal structure. The solid electrolyte particle 102 may consist essentially of Li, M, and X. The fact that "the solid electrolyte particle 102 consists essentially of Li, M, and X" means that, in the solid electrolyte particle 102, the proportion (molar fraction) of the total amount of Li, M, and X to the total amount of all elements constituting the solid electrolyte particle 102 is greater than or equal to 90%. As an example, the proportion may be greater than or equal to 95%. The solid electrolyte particle 102 may consist of Li, M, and X only.

In order to enhance the ion conductivity, M may include at least one element selected from the group consisting of Group 1 elements, Group 2 elements, Group 3 elements, Group 4 elements, and lanthanoid elements. M may include at least one element selected from the group consisting of Group 5 elements, Group 12 elements, Group 13 elements, and Group 14 elements.

Examples of the Group 1 element are Na, K, Rb, and Cs. Examples of the Group 2 element are Mg, Ca, Sr, and Ba. Examples of the Group 3 element are Sc and Y. Examples of the Group 4 element are Ti, Zr, and Hf. Examples of the lanthanoid element are La, Ce, Pr, Nd, Sm, Eu, Gd, Tb, Dy, Ho, Er, Tm, Yb, and Lu. Examples of the Group 5 element are Nb and Ta. An example of the Group 12 element is Zn. Examples of the Group 13 element are Al, Ga, and In. An example of the Group 14 element is Sn.

In order to further enhance the ion conductivity, M may include at least one element selected from the group consisting of Na, K, Mg, Ca, Sr, Ba, Sc, Y, Zr, Hf, La, Ce, Pr, Nd, Sm, Eu, Gd, Tb, Dy, Ho, Er, Tm, Yb, and Lu.

In order to further enhance the ion conductivity, M may include at least one element selected from the group consisting of Mg, Ca, Sr, Y, Sm, Gd, Dy, and Hf. M may include Y.

In order to further enhance the ion conductivity, X may include at least one element selected from the group consisting of Br, Cl, and I.

In order to further enhance the ion conductivity, X may include Br, Cl, and I.

The solid electrolyte particle 102 may be represented by the following Formula (1):

$$Li_{\alpha}M_{\beta}X_{\gamma} \qquad \text{Formula (1)}$$

in Formula (1), $\alpha$, $\beta$, and $\gamma$ are each independently a value greater than 0.

For example, when M includes Y, in Formula (1) above, the following mathematical expressions:

$$2.5 \leq \alpha \leq 3.5;$$

$$0.5 \leq \beta \leq 1.5;$$

and

$$\gamma = 6$$

may be satisfied.

The solid electrolyte particle 102 may include $Li_3YX_6$.

The solid electrolyte particle 102 may include $Li_3YBr_6$ or $Li_3YBr_xCl_yI_{6-x-y}$, Here, x and y satisfy $0 < x < 6$, $0 < y \leq 6$, and $0 < (x + y) \leq 6$.

The solid electrolyte particle 102 may include at least one selected from the group consisting of $Li_3YBr_6$, $Li_3YBr_2Cl_4$, and $Li_3YBr_2Cl_2I_2$ or may include $Li_3YBr_2Cl_4$. The solid electrolyte particle 102 may be $Li_3YBr_2Cl_4$.

The shape of the solid electrolyte particle 102 is not limited. The shape of the solid electrolyte particle 102 may be, for example, acicular, spherical, oval spherical, fibrous, or the like. The solid electrolyte particle 102 may have a pallet or plate shape.

The solid electrolyte particle 102 is, for example, substantially free from sulfur. The fact that the solid electrolyte particle 102 is substantially free from sulfur means that the solid electrolyte particle 102 does not include sulfur as a constituent element excluding sulfur inevitably included as an impurity. In such a case, the amount of sulfur included in the solid electrolyte particle 102 as an impurity is, for example, less than or equal to 1 mol%. The solid electrolyte particle 102 need not contain sulfur. When the solid electrolyte particle 102 does not contain sulfur, the solid electrolyte particle 102 does not generate hydrogen sulfide even if exposed to the atmosphere and therefore tends to be excellent in safety.

In the electrode material 1000 in Embodiment 1, the solid electrolyte particle 102 and the active material particle 101 may be in contact with each other as shown in Fig. 1.

The electrode material 1000 in Embodiment 1 may include, for example, a plurality of solid electrolyte particles 102 and a plurality of active material particles 101.

A method for manufacturing the solid electrolyte particle 102 will then be described. The solid electrolyte particle 102 will be manufactured by, for example, the following method.

First, raw material powders are provided so as to give the compounding ratio of a target composition. The raw material powders may be, for example, halides. For example, when $Li_3YBr_2Cl_4$ is produced, LiBr, LiCl, and $YCl_3$ are provided at a molar ratio of LiBr : LiCl : $YCl_3$ = 2.0 : 1.0 : 1.0. The raw material powders may be mixed at a molar ratio adjusted in advance such that a composition change which may occur during the synthesis process is offset.

The types of the raw material powders are not limited to the above. For example, a combination of LiCl and $YBr_3$ and a complex anion compound such as $LiBr_{0.5}Cl_{0.5}$ may be used. A mixture of a raw material powder containing oxygen and a halide may be used. Examples of the raw material powder containing oxygen include an oxide, a hydroxide, a sulfate, and a nitrate. Examples of the halide include ammonium halide.

The raw material powders are thoroughly mixed using a mortar and a pestle, a ball mill, or a mixer to obtain a powder mixture. Subsequently, the raw material powders are pulverized by a mechanochemical milling method. Thus, the raw material powders react to give a solid electrolyte particle 102. Alternatively, the solid electrolyte particle 102 may be obtained by thoroughly mixing the raw material powders and then heat-treating the powder mixture in vacuum or in an inert atmosphere. The heat treatment may be performed, for example, in a range of greater than or equal to 100°C and less than or equal to 650°C for greater than or equal to 1 hour.

Consequently, a solid electrolyte particle 102 including a crystal phase is obtained.

The structure of the crystal phase (i.e., crystal structure) in the solid electrolyte particle 102 can be determined by selecting the reaction method between raw material powders and the reaction conditions.

[Binder]

The electrode material 1000 may include a binder for the purpose of improving the adhesion between individual particles. The binder is used for improving the binding property of the materials that constitute the electrode material 1000.

Examples of the binder include polyvinylidene fluoride, polytetrafluoroethylene, polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyether sulfone, hexafluoropolypropylene, styrene butadiene rubber, and carboxymethyl cellulose. Furthermore, as the binder, a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene can be used. These binders may be used alone or in combination of two or more thereof.

As the binder, an elastomer may be used. The elastomer means a polymer having elasticity. The elastomer that is used as the binder may be a thermoplastic elastomer or a thermosetting elastomer. The binder may include a thermoplastic elastomer. Examples of the elastomer include a styrene-ethylene/butylene-styrene block copolymer (SEBS), a styrene-ethylene/propylene-styrene block copolymer (SEPS), a styrene-ethylene/ethylene/propylene-styrene block copolymer (SEEPS), butylene rubber (BR), isoprene rubber (IR), chloroprene rubber (CR), acrylonitrile-butadiene rubber (NBR), styrene-butylene rubber (SBR), a styrene-butadiene-styrene block copolymer (SBS), a styrene-isoprene-styrene block copolymer (SIS), hydrogenated isoprene rubber (HIR), hydrogenated butyl rubber (HIIR), hydrogenated nitrile rubber (HNBR), and hydrogenated styrene-butylene rubber (HSBR). As the binder, a mixture of two or more selected from these elastomers may be used.

[Conductive assistant]

The electrode material 1000 may include a conductive assistant for the purpose of enhancing the electron conductivity. The conductive assistants that can be used are, for example,

(i) graphite, such as natural graphite and artificial graphite;
(ii) carbon black, such as acetylene black and Ketjen black;
(iii) conductive fibers, such as a carbon fiber and a metal fiber;
(iv) carbon fluoride;
(v) metal powders, such as aluminum;
(vi) conductive whiskers, such as zinc oxide and potassium titanate;
(vii) conductive metal oxides, such as titanium oxide; and
(viii) conductive polymeric compounds, such as polyanion, polypyrrole, and polythiophene.

When a carbon conductive assistant is used, the cost can be reduced.

(Embodiment 2)

Embodiment 2 will now be described. The description overlapping that in the above-described embodiment 1 is omitted as appropriate.

Fig. 2 is a cross-sectional view of a battery 2000 according to Embodiment 2.

The battery 2000 in Embodiment 2 includes a positive electrode 201, a negative electrode 203, and an electrolyte layer 202. The electrolyte layer 202 is located between the positive electrode 201 and the negative electrode 203. At least one selected from the group consisting of the positive electrode 201 and the negative electrode 203 includes the electrode material 1000 in Embodiment 1 described above.

As shown in Fig. 2, in the battery 2000 in Embodiment 2, the negative electrode 203 may include the electrode material 1000 in Embodiment 1 described above. Hereinafter, a battery 2000 in which the negative electrode 203 includes the electrode material 1000 will be described. However, the battery 2000 of Embodiment 2 is not limited to the following configuration. In the battery 2000, the positive electrode 201 may include the electrode material 1000 in Embodiment 1 described above.

The negative electrode 203 is, for example, layered. The thickness of the negative electrode 203 may be greater than or equal to 10 μm and less than or equal to 500 μm. When the thickness of the negative electrode 203 is greater than or equal to 10 μm, the energy density of the battery 2000 can be sufficiently secured. When the thickness of the negative electrode 203 is less than or equal to 500 μm, the battery 2000 can operate at high output.

The electrolyte layer 202 is a layer containing an electrolyte material. Examples of the electrolyte material include a solid electrolyte. That is, the electrolyte layer 202 may be a solid electrolyte layer containing a solid electrolyte. The electrolyte layer 202 may be constituted of a solid electrolyte.

As the solid electrolyte contained in the electrolyte layer 202, the materials exemplified as the above-described solid electrolyte particle 102 may be used. However, the solid electrolyte contained in the electrolyte layer 202 may have a cubic crystal structure. The composition and shape of the solid electrolyte contained in the electrolyte layer 202 may be the same as or different from those of the solid electrolyte particle 102.

The electrolyte layer 202 may contain a solid electrolyte as a main component. That is, the electrolyte layer 202 may contain the solid electrolyte at a mass proportion of greater than or equal to 50% (greater than or equal to 50 mass%) with respect to the total amount of the electrolyte layer 202.

The electrolyte layer 202 may contain the solid electrolyte at a mass proportion of greater than or equal to 70% (greater than or equal to 70 mass%) with respect to the total amount of the electrolyte layer 202.

The electrolyte layer 202 may further contain inevitable impurities. The electrolyte layer 202 may contain the starting materials that have been used for synthesis of the solid electrolyte. The electrolyte layer 202 may contain by-products or decomposition products generated when the solid electrolyte is synthesized.

In the electrolyte layer 202, the mass ratio of the solid electrolyte to the electrolyte layer 202 can be substantially 1. The fact that "the mass ratio is substantially 1" means that the above-mentioned mass ratio calculated without considering inevitable impurities that may be contained in the electrolyte layer 202 is 1. That is, the electrolyte layer 202 may be constituted of the solid electrolyte only.

The electrolyte layer 202 may contain two or more of the materials mentioned as the solid electrolyte.

The electrolyte layer 202 may have a thickness of greater than or equal to 1 $\mu$m and less than or equal to 500 $\mu$m.

When the thickness of the electrolyte layer 202 is greater than or equal to 1 $\mu$m, the risk of short circuit between the positive electrode 201 and the negative electrode 203 is reduced. When the thickness of the electrolyte layer 202 is less than or equal to 500 $\mu$m, the battery 2000 can easily operate at high output.

The positive electrode 201 includes a material that has a property of occluding and releasing metal ions (for example, lithium ions). The positive electrode 201 may include, for example, a positive electrode active material.

Examples of the positive electrode active material include:

(i) a lithium-containing transition metal oxide, such as $Li(NiCoAl)O_2$, $Li(NiCoMn)O_2$, and $LiCoO_2$;
(ii) a transition metal fluoride;
(iii) a polyanionic material;
(iv) a fluorinated polyanionic material;
(v) a transition metal sulfide;
(vi) a transition metal oxysulfide; and
(vii) a transition metal oxynitride.

In particular, when a lithium-containing transition metal oxide is used as the positive electrode active material, the manufacturing cost of the battery 2000 can be reduced, and the average discharge voltage of the battery 2000 can be increased.

The positive electrode 201 may include a solid electrolyte. According to the above configuration, the lithium-ion conductivity inside the positive electrode 201 is enhanced, and operation at high output is possible.

Examples of the solid electrolyte included in the positive electrode 201 include a halide solid electrolyte, a sulfide solid electrolyte, an oxide solid electrolyte, a polymeric solid electrolyte, and a complex hydride solid electrolyte.

As the halide solid electrolyte, for example, the materials exemplified as the above-described solid electrolyte particle 102 may be used.

As the sulfide solid electrolyte, for example, $Li_2S-P_2S_5$, $Li_2S-SiS_2$, $Li_2S-B_2S_3$, $Li_2S-GeS_2$, $Li_{3.25}Ge_{0.25}P_{0.75}S_4$, and $Li_{10}GeP_2S_{12}$ can be used. LiX, $Li_2O$, $MO_q$, $Li_pMO_q$, or the like may be added to these electrolytes. The element X in "LiX" is at least one selected from the group consisting of F, Cl, Br, and I; the element M in "$MO_q$" and "$Li_pMO_q$" is at least one selected from the group consisting of P, Si, Ge, B, Al, Ga, In, Fe, and Zn; and p and q in "$MO_q$" and "$Li_pMO_q$" are each independently a natural number.

The oxide solid electrolytes that can be used are, for example,

(i) NASICON-type solid electrolytes represented by $LiTi_2(PO_4)_3$ and element substitutes thereof;
(ii) (LaLi)$TiO_3$-based perovskite-type solid electrolytes;
(iii) LISICON-type solid electrolytes represented by $Li_{14}ZnGe_4O_{16}$, $Li_4SiO_4$, $LiGeO_4$, and element substitutes thereof;
(iv) garnet-type solid electrolytes represented by $Li_7La_3Zr_2O_{12}$ and element substitutes thereof;
(v) $Li_3N$ and H-substitutes thereof;
(vi) $Li_3PO_4$ and N-substitutes thereof; and
(vii) glass or glass ceramics formed by adding $Li_2SO_4$, $Li_2CO_3$, or the like to an Li-B-O compound, such as $LiBO_2$ or $Li_3BO_3$, as a base material.

As the polymeric solid electrolyte, for example, a compound of a polymeric compound and a lithium salt can be used. The polymeric compound may have an ethylene oxide structure. A polymeric compound having an ethylene oxide structure can contain a large amount of a lithium salt. Accordingly, it is possible to more enhance the ion conductivity. As the lithium salt, $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, or the like can be used. One lithium salt selected from these salts may be used alone, or a mixture of two or more lithium salts selected from these salts may be used.

As the complex hydride solid electrolyte, for example, $LiBH_4$-LiI or $LiBH_4$-$P_2S_5$ can be used.

The shape of the positive electrode active material may be particulate. The median diameter of the positive electrode active material particle may be greater than or equal to 0.1 $\mu$m and less than or equal to 100 $\mu$m. When the median diameter of the positive electrode active material particle is greater than or equal to 0.1 $\mu$m, the positive electrode active material and the solid electrolyte can form a good dispersion state in the positive electrode 201. Consequently, the charge and discharge characteristics of the battery 2000 are improved. When the median diameter of the positive electrode active material particle is less than or equal to 100 $\mu$m, the lithium diffusion speed in the positive electrode active material particle is improved. Consequently, the battery 2000 can operate at high output.

The shape of the solid electrolyte included in the positive electrode 201 may be particulate. In the positive electrode 201, the median diameter of the positive electrode active material particle may be larger than that of the solid electrolyte particle. Consequently, a good dispersion state of the positive electrode active material particle and the solid electrolyte particle can be formed.

In the positive electrode 201, the volume ratio Vp of the volume of the positive electrode active material particle to the total volume of the positive electrode active material particle and the solid electrolyte particle may be greater than or equal to 0.1 and less than or equal to 0.95 and may be greater than or equal to 0.3. When the volume ratio Vp is greater than or equal to 0.3, the energy density of the battery 2000 can be sufficiently secured. When the volume ratio Vp is less than or equal to 0.95, the battery 2000 can operate at high output.

The positive electrode 201 may be, for example, layered. The thickness of the positive electrode 201 may be greater than or equal to 10 $\mu$m and less than or equal to 500 $\mu$m. When the thickness of the positive electrode 201 is greater than or equal to 10 $\mu$m, the energy density of the battery 2000 can be sufficiently secured. When the thickness of the positive electrode 201 is less than or equal to 500 $\mu$m, the battery 2000 can operate at high output.

The positive electrode active material may be coated by a coating material. As the coating material, a material having low electron conductivity can be used. As the coating material, an oxide material, an oxide solid electrolyte, or the like can be used.

As the oxide material, for example, $SiO_2$, $Al_2O_3$, $TiO_2$, $B_2O_3$, $Nb_2O_5$, $WO_3$, and $ZrO_2$ can be used.

The oxide solid electrolytes that can be used are, for example,

(i) Li-Nb-O compounds such as $LiNbO_3$;
(ii) Li-B-O compounds such as $LiBO_2$ and $Li_3BO_3$;
(iii) Li-Al-O compounds such as $LiAlO_2$;
(iv) Li-Si-O compounds such as $Li_4SiO_4$;
(v) Li-S-O compounds such as $Li_2SO_4$;
(vi) Li-Ti-O compounds such as $Li_4Ti_5O_{12}$;
(vii) Li-Zr-O compounds such as $Li_2ZrO_3$;
(viii) Li-Mo-O compounds such as $Li_2MoO_3$;
(ix) Li-V-O compounds such as $LiV_2O_5$; and
(x) Li-W-O compounds such as $Li_2WO_4$.

Oxide solid electrolytes have high ion conductivity and high high-potential stability. Accordingly, the charge and discharge efficiency can be more improved by using an oxide solid electrolyte as the coating material.

At least one selected from the group consisting of the positive electrode 201 and the electrolyte layer 202 may include a binder for the purpose of improving the adhesion between individual particles. As the binder, for example, those described above for the electrode material 1000 may be used.

The positive electrode 201 may include a conductive assistant for the purpose of enhancing the electron conductivity. As the conductive assistant, for example, those described above for the electrode material 1000 may be used.

Examples of the shape of the battery 2000 include a coin type, a cylindrical type, a square type, a sheet type, a button type, a flat type, and a stacked type.

EXAMPLES

The details of the present disclosure will now be described using Examples and Comparative Examples. The electrode material and battery of the present disclosure are not limited to the following Examples.

[Example 1]

(Production of solid electrolyte particle)

Raw material powders LiBr, YBr$_3$, LiCl, and YCl$_3$ were weighed at a molar ratio of Li : Y : Br : Cl = 3 : 1 : 2 : 4 in a dry argon atmosphere. These powders were pulverized and mixed in a mortar. Subsequently, the mixture was heat-treated at 500°C for 4 hours to obtain a powder of Li$_3$YBr$_2$Cl$_4$ as a solid electrolyte. This powder was subjected to milling treatment with a bead mill using zirconia balls having a diameter of 0.5 mm at a peripheral speed of 13 m/s for 3 hours. Consequently, a solid electrolyte particle Li$_3$YBr$_2$Cl$_4$ with an average particle diameter of 0.3 $\mu$m was obtained.

(Evaluation of ion conductivity of solid electrolyte particle)

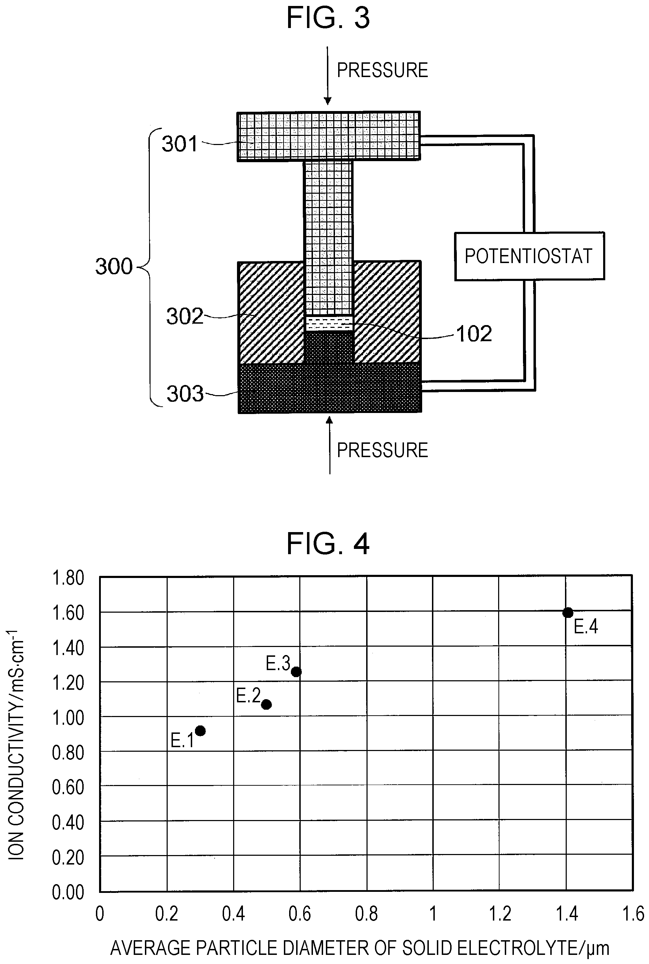

Fig. 3 is a schematic view of compression molding dies used for evaluating the ion conductivity of solid electrolyte particles.

The compression molding dies 300 included a punch upper part 301, a die 302, and a punch lower part 303. The punch upper part 301 and the punch lower part 303 were both formed from electron-conductive stainless steel. The die 302 was formed from insulating polycarbonate.

The ion conductivity of the solid electrolyte particle described above was measured using the compression molding dies 300 shown in Fig. 3 by the following method.

The solid electrolyte particle (i.e., the solid electrolyte particle 102 in Fig. 3) was loaded inside the compression molding dies 300 in a dry atmosphere having a dew point of less than or equal to -30°C. A pressure of 300 MPa was applied to the solid electrolyte particle inside the compression molding dies 300 using the punch upper part 301 and the punch lower part 303.

The punch upper part 301 and the punch lower part 303 were connected to a potentiostat (PrincetonApplied Research, Inc., VersaSTAT4) equipped with a frequency response analyzer, while applying the pressure. The punch upper part 301 was connected to the working electrode and the potential measurement terminal. The punch lower part 303 was connected to the counter electrode and the reference electrode. The impedance of the solid electrolyte particle was measured by an electrochemical impedance measurement method at room temperature. Consequently, the ion conductivity of the solid electrolyte particle was measured.

Fig. 4 shows the ion conductivity of the solid electrolyte particle measured at 22°C. Fig. 4 is a graph showing a relationship between the average particle diameter and the ion conductivity of the solid electrolyte particles produced in Examples 1 to 4. As obvious from Fig. 4, the ion conductivity of the solid electrolyte particle Li$_3$YBr$_2$Cl$_4$ having an average particle diameter of 0.3 $\mu$m was 0.92 mS·cm$^{-1}$.

(Production of electrode material)

An active material particle Li$_4$Ti$_5$O$_{12}$ (manufactured by Toshima manufacturing Co., Ltd.) having an average particle diameter of 1.0 $\mu$m, a solid electrolyte particle Li$_3$YBr$_2$Cl$_4$ having an average particle diameter of 0.3 $\mu$m, and a vapor grown carbon fiber (VGCF (registered trademark)) as a conductive assistant were weighed at a mass ratio of Li$_4$Ti$_5$O$_{12}$ : Li$_3$YBr$_2$Cl$_4$ : VGCF = 60 : 30 : 5 in a dry argon atmosphere. On this occasion, the ratio R1 of the volume of the active material particle to the sum of the volume of the active material particle and the volume of the solid electrolyte particle was 60% when expressed as percentage. The volume of the active material particle was calculated from the bulk density of the active material particle measured in advance and the mass of the active material particle used. Similarly, the volume of the solid electrolyte particle was calculated from the bulk density of the solid electrolyte particle measured in advance and the mass of the solid electrolyte particle used. The ratio R2 of the average particle diameter of the active material particle to the average particle diameter of the solid electrolyte particle was 3.33. These materials were mixed in an agate mortar to produce an electrode material of Example 1.

The produced electrode material was observed with an SEM, and the ratio R1 and the ratio R2 were specified from the SEM image by the method described above. As a result, the values of the ratio R1 and the ratio R2 specified from the SEM image were respectively almost the same as the values of the ratio R1 and the ratio R2 specified from the active material particle and the solid electrolyte particle used as the raw materials.

(Production of secondary battery)

In an insulating outer cylinder, 25.6 mg of the electrode material of Example 1 and 80 mg of a solid electrolyte particle having an average particle diameter of 0.3 $\mu$m were stacked in this order such that the charging capacity of the electrode formed from the electrode material above was 2.0 mAh/cm$^2$. The obtained stack was compression molded at a pressure of 360 MPa to produce a stack composed of a negative electrode and an electrolyte layer. Subsequently, metal In (thickness: 200 $\mu$m), metal Li (thickness: 300 $\mu$m), and metal In (thickness: 200 $\mu$m) were stacked in this order on the electrolyte layer on the side opposite to the side in contact with the negative electrode. The obtained stack was compression molded at a pressure of 80 MPa to produce a stack composed of a positive electrode, the electrolyte layer, and the negative electrode. Subsequently, current collectors made of stainless steel were disposed on and under the stack, and a current collector lead was attached to each of the current collectors. Finally, the inside of the insulating outer cylinder was sealed by isolating the inside of the insulating outer cylinder from the outside atmosphere with an insulating ferrule to produce a battery of Example 1.

(Charge and discharge test)

The following charge and discharge test was performed using the battery of Example 1. First, the battery was disposed in a thermostat of 25°C. The battery was subjected to constant current charging at a current value of 65 $\mu$A. The charging was terminated when the potential with respect to Li reached 1.0 V.

Secondly, the battery was discharged at a current value of 65 $\mu$A. The discharging was terminated when the potential with respect to Li reached 2.5 V.

Subsequently, the battery was subjected to constant current charging at a current value of 385 $\mu$A. The charging was terminated when the potential with respect to Li reached 1.0 V.

Subsequently, the battery was discharged at a current value of 385 $\mu$A. The discharging was terminated when the potential with respect to Li reached 2.5 V.

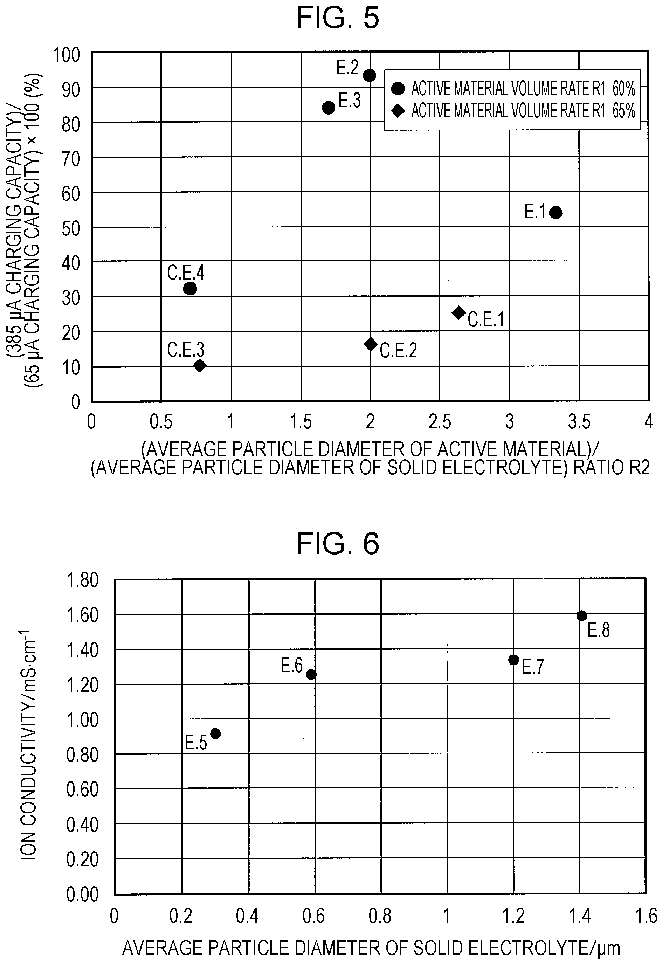

The ratio of the charging capacity when charged at 385 $\mu$A to the charging capacity when charged at 65 $\mu$A was calculated based on the results of the charge and discharge test above. The result is shown in Table 1 and Fig. 5. Fig. 5 is a graph showing a relationship between the ratio R2 of the average particle diameter of the active material particle to the average particle diameter of the solid electrolyte particle and the ratio of the charging capacity at 385 $\mu$A to the charging capacity at 65 $\mu$A in Examples 1 to 4 and Comparative Examples 1 to 3. In the graph of Fig. 5, the horizontal axis indicates the ratio R2. The vertical axis indicates the result of the charge and discharge test.

[Example 2]

(Production of solid electrolyte particle)

A solid electrolyte particle $Li_3YBr_2Cl_4$ was obtained by the same method as in Example 1 except that a powder of $Li_3YBr_2Cl_4$ as a solid electrolyte was subjected to milling treatment with a bead mill using zirconia balls having a diameter of 0.5 mm at a peripheral speed of 2 m/s for 1.5 hours. This solid electrolyte particle had an average particle diameter of 0.50 $\mu$m.

(Evaluation of ion conductivity of solid electrolyte particle)

The ion conductivity of the produced solid electrolyte particle was measured by the same method as in Example 1. The result is shown in Fig. 4. As obvious from Fig. 4, the ion conductivity of the solid electrolyte particle $Li_3YBr_2Cl_4$ having an average particle diameter of 0.50 $\mu$m was 1.07 mS·cm$^{-1}$.

(Production of electrode material)

An active material particle $Li_4Ti_5O_{12}$ (manufactured by Toshima manufacturing Co., Ltd.) having an average particle diameter of 1.0 $\mu$m, a solid electrolyte particle $Li_3YBr_2Cl_4$ having an average particle diameter of 0.50 $\mu$m, and a conductive assistant VGCF were weighed at a mass ratio of $Li_4Ti_5O_{12}$ : $Li_3YBr_2Cl_4$ : VGCF = 60 : 30 : 5 in a dry argon atmosphere. On this occasion, the ratio R1 of the volume of the active material particle to the sum of the volume of the active material particle and the volume of the solid electrolyte particle was 60% when expressed as percentage. The ratio R2 of the average particle diameter of the active material particle to the average particle diameter of the solid electrolyte particle was 2.00. These materials were mixed in an agate mortar to produce an electrode material of Example 2.

(Production of secondary battery)

A battery of Example 2 was produced by the same method as in Example 1 except for using the electrode material of Example 2.

(Charge and discharge test)

The battery of Example 2 was subjected to a charge and discharge test by the same method as in Example 1.
The ratio of the charging capacity when charged at 385 $\mu$A to the charging capacity when charged at 65 $\mu$A was calculated based on the results of the charge and discharge test. The result is shown in Table 1 and Fig. 5.

[Example 3]

(Production of solid electrolyte particle)

A solid electrolyte particle $Li_3YBr_2Cl_4$ was obtained by the same method as in Example 1 except that a powder of $Li_3YBr_2Cl_4$ as a solid electrolyte was subjected to milling treatment with a bead mill using zirconia balls having a diameter of 0.5 mm at a peripheral speed of 1 m/s for 1.5 hours. This solid electrolyte particle had an average particle diameter of 0.59 $\mu$m.

(Evaluation of ion conductivity of solid electrolyte particle)

The ion conductivity of the produced solid electrolyte particle was measured by the same method as in Example 1. The result is shown in Fig. 4. As obvious from Fig. 4, the ion conductivity of the solid electrolyte particle $Li_3YBr_2Cl_4$ having an average particle diameter of 0.59 $\mu$m was 1.26 mS·cm$^{-1}$.

(Production of electrode material)

An active material particle $Li_4Ti_5O_{12}$ (manufactured by Toshima manufacturing Co., Ltd.) having an average particle diameter of 1.0 $\mu$m, a solid electrolyte particle $Li_3YBr_2Cl_4$ having an average particle diameter of 0.59 $\mu$m, and a conductive assistant VGCF were weighed at a molar ratio of $Li_4Ti_5O_{12}$ : $Li_3YBr_2Cl_4$ : VGCF = 60 : 30 : 5 in a dry argon atmosphere. On this occasion, the ratio R1 of the volume of the active material particle to the sum of the volume of the active material particle and the volume of the solid electrolyte particle was 60% when expressed as percentage. The ratio R2 of the average particle diameter of the active material particle to the average particle diameter of the solid electrolyte particle was 1.69. These materials were mixed in an agate mortar to produce an electrode material of Example 3.

(Production of secondary battery)

A battery of Example 3 was produced by the same method as in Example 1 except for using the electrode material of Example 3.

(Charge and discharge test)

The battery of Example 3 was subjected to a charge and discharge test by the same method as in Example 1.
The ratio of the charging capacity when charged at 385 $\mu$A to the charging capacity when charged at 65 $\mu$A was calculated based on the results of the charge and discharge test. The result is shown in Table 1 and Fig. 5.

[Example 4]

(Production of solid electrolyte particle)

A solid electrolyte particle $Li_3YBr_2Cl_4$ was obtained by the same method as in Example 1 except that a powder of $Li_3YBr_2Cl_4$ as a solid electrolyte was subjected to milling treatment with a pot mill using zirconia balls having a diameter of 5 mm at 116 rpm for 6.5 hours. This solid electrolyte particle had an average particle diameter of 1.41 $\mu$m.

(Evaluation of ion conductivity of solid electrolyte particle)

The ion conductivity of the produced solid electrolyte particle was measured by the same method as in Example 1. The result is shown in Fig. 4. As obvious from Fig. 4, the ion conductivity of the solid electrolyte particle $Li_3YBr_2Cl_4$ having an average particle diameter of 1.41 $\mu$m was 1.59 mS·cm$^{-1}$.

(Production of electrode material)

An active material particle $Li_4Ti_5O_{12}$ (manufactured by Toshima manufacturing Co., Ltd.) having an average particle diameter of 1.0 $\mu$m, a solid electrolyte particle $Li_3YBr_2Cl_4$ having an average particle diameter of 1.41 $\mu$m, and a conductive assistant VGCF were weighed at a mass ratio of $Li_4Ti_5O_{12}$ : $Li_3YBr_2Cl_4$ : VGCF = 60 : 30 : 5 in a dry argon atmosphere. On this occasion, the ratio R1 of the volume of the active material particle to the sum of the volume of the active material particle and the volume of the solid electrolyte particle was 60% when expressed as percentage. The ratio R2 of the average particle diameter of the active material particle to the average particle diameter of the solid electrolyte particle was 0.71. These materials were mixed in an agate mortar to produce an electrode material of Example 4.

(Production of secondary battery)

A battery of Example 4 was produced by the same method as in Example 1 except for using the electrode material of Example 4.

(Charge and discharge test)

The battery of Example 4 was subjected to a charge and discharge test by the same method as in Example 1.
The ratio of the charging capacity when charged at 385 $\mu$A to the charging capacity when charged at 65 $\mu$A was calculated based on the results of the charge and discharge test. The result is shown in Table 1 and Fig. 5.

[Comparative Example 1]

A solid electrolyte particle $Li_3YBr_2Cl_4$ was obtained by the same method as in Example 1 except that a powder of $Li_3YBr_2Cl_4$ as a solid electrolyte was subjected to milling treatment with a pot mill using zirconia balls having a diameter of 1 mm at 116 rpm for 50 hours. This solid electrolyte particle had an average particle diameter of 0.38 $\mu$m.

(Production of electrode material)

An active material particle $Li_4Ti_5O_{12}$ (manufactured by Toshima manufacturing Co., Ltd.) having an average particle diameter of 1.0 $\mu$m, a solid electrolyte particle $Li_3YBr_2Cl_4$ having an average particle diameter of 0.38 $\mu$m, and a conductive assistant VGCF were weighed at a mass ratio of $Li_4Ti_5O_{12}$ : $Li_3YBr_2Cl_4$ : VGCF = 70 : 25 : 5 in a dry argon atmosphere. On this occasion, the ratio R1 of the volume of the active material particle to the sum of the volume of the active material particle and the volume of the solid electrolyte particle was 65% when expressed as percentage. The ratio R2 of the average particle diameter of the active material particle to the average particle diameter of the solid electrolyte particle was 2.63. These materials were mixed in an agate mortar to produce an electrode material of Comparative Example 1.

(Production of secondary battery)

In an insulating outer cylinder, 11.2 mg of the electrode material of Comparative Example 1 and 80 mg of a solid electrolyte particle having an average particle diameter of 0.38 $\mu$m were stacked in this order such that the charging capacity of the electrode formed from the electrode material above was 2.0 mAh/cm$^2$. The obtained stack was compression molded at a pressure of 360 MPa to produce a stack composed of a negative electrode and an electrolyte layer. Subsequently, metal In (thickness: 200 $\mu$m), metal Li (thickness: 300 $\mu$m), and metal In (thickness: 200 $\mu$m) were stacked in this order on the electrolyte layer on the side opposite to the side in contact with the negative electrode. The obtained stack was compression molded at a pressure of 80 MPa to produce a stack composed of a positive electrode, the electrolyte layer, and the negative electrode. Subsequently, current collectors made of stainless steel were disposed on and under the stack, and a current collector lead was attached to each of the current collectors. Finally, the inside of the insulating outer cylinder was sealed by isolating the inside of the insulating outer cylinder from the outside atmosphere with an insulating ferrule to produce a battery of Comparative Example 1.

(Charge and discharge test)

The battery of Comparative Example 1 was subjected to a charge and discharge test by the same method as in Example 1.
The ratio of the charging capacity when charged at 385 $\mu$A to the charging capacity when charged at 65 $\mu$A

was calculated based on the results of the charge and discharge test. The result is shown in Table 1 and Fig. 5.

[Comparative Example 2]

(Production of solid electrolyte particle)

A solid electrolyte particle $Li_3YBr_2Cl_4$ was obtained by the same method as in Example 1 except that a powder of $Li_3YBr_2Cl_4$ as a solid electrolyte was subjected to milling treatment with a bead mill using zirconia balls having a diameter of 0.5 mm at a peripheral speed of 2 m/s for 1.5 hours. This solid electrolyte particle had an average particle diameter of 0.5 $\mu$m.

(Production of electrode material)

An active material particle $Li_4Ti_5O_{12}$ (manufactured by Toshima manufacturing Co., Ltd.) having an average particle diameter of 1.0 $\mu$m, a solid electrolyte particle $Li_3YBr_2Cl_4$ having an average particle diameter of 0.5 $\mu$m, and a conductive assistant VGCF were weighed at a mass ratio of $Li_4Ti_5O_{12}$ : $Li_3YBr_2Cl_4$ : VGCF = 70 : 25 : 5 in a dry argon atmosphere. On this occasion, the ratio R1 of the volume of the active material particle to the sum of the volume of the active material particle and the volume of the solid electrolyte particle was 65% when expressed as percentage. The ratio R2 of the average particle diameter of the active material particle to the average particle diameter of the solid electrolyte particle was 2.00. These materials were mixed in an agate mortar to produce an electrode material of Comparative Example 2.

(Production of secondary battery)

A battery of Comparative Example 2 was produced by the same method as in Comparative Example 1 except for using the electrode material of Comparative Example 2.

(Charge and discharge test)

The battery of Comparative Example 2 was subjected to a charge and discharge test by the same method as in Example 1.
The ratio of the charging capacity when charged at 385 $\mu$A to the charging capacity when charged at 65 $\mu$A was calculated based on the results of the charge and discharge test. The result is shown in Table 1 and Fig. 5.

[Comparative Example 3]

(Production of solid electrolyte particle)

A solid electrolyte particle $Li_3YBr_2Cl_4$ was obtained by the same method as in Example 1 except that a powder of $Li_3YBr_2Cl_4$ as a solid electrolyte was subjected to milling treatment with a pot mill using zirconia balls having a diameter of 5 mm at 116 rpm for 25 hours. This solid electrolyte particle had an average particle diameter of 1.28 $\mu$m.

(Production of electrode material)

An active material particle $Li_4Ti_5O_{12}$ (manufactured by Toshima manufacturing Co., Ltd.) having an average particle diameter of 1.0 $\mu$m, a solid electrolyte particle $Li_3YBr_2Cl_4$ having an average particle diameter of 1.28 $\mu$m, and a conductive assistant VGCF were weighed at a mass ratio of $Li_4Ti_5O_{12}$ : $Li_3YBr_2Cl_4$ : VGCF = 70 : 25 : 5 in a dry argon atmosphere. On this occasion, the ratio R1 of the volume of the active material particle to the sum of the volume of the active material particle and the volume of the solid electrolyte particle was 65% when expressed as percentage. The ratio R2 of the average particle diameter of the active material particle to the average particle diameter of the solid electrolyte particle was 0.78. These materials were mixed in an agate mortar to produce an electrode material of Comparative Example 3.

(Production of secondary battery)

A battery of Comparative Example 3 was produced by the same method as in Comparative Example 1 except for using the electrode material of Comparative Example 3.

(Charge and discharge test)

The battery of Comparative Example 3 was subjected to a charge and discharge test by the same method as in Example 1.

The ratio of the charging capacity when charged at 385 μA to the charging capacity when charged at 65 μA was calculated based on the results of the charge and discharge test. The result is shown in Table 1 and Fig. 5.

[Table 1]

| | Volume ratio R1 of active material particle (%) (*1) | Ratio R2 of average particle diameter (*2) | (385 μA charging capacity)/(65 μA charging capacity) × 100 (%) |
|---|---|---|---|
| Example 1 | 60 | 3.33 | 53.83 |
| Example 2 | 60 | 2.00 | 93.22 |
| Example 3 | 60 | 1.69 | 84.03 |
| Example 4 | 60 | 0.71 | 32.11 |
| Comparative Example 1 | 65 | 2.63 | 25.01 |
| Comparative Example 2 | 65 | 2.00 | 16.28 |
| Comparative Example 3 | 65 | 0.78 | 10.47 |
| (*1) A ratio R1 of the volume of active material particle to the sum of the volume of active material particle and the volume of solid electrolyte particle<br>(*2) A ratio R2 of the average particle diameter of active material to the average particle diameter of solid electrolyte particle | | | |

[Example 5]

(Production of solid electrolyte particle)

Raw material powders LiBr, YBr$_3$, LiCl, and YCl$_3$ were weighed at a molar ratio of Li : Y : Br : Cl = 3 : 1 : 2 : 4 in a dry argon atmosphere and were pulverized and mixed in a mortar. Subsequently, the mixture was heat-treated at 500°C for 4 hours to obtain a powder Li$_3$YBr$_2$Cl$_4$ as a solid electrolyte. This powder was subjected to milling treatment with a bead mill using zirconia balls having a diameter of 0.5 mm at a peripheral speed of 13 m/s for 3 hours. Consequently, a solid electrolyte particle Li$_3$YBr$_2$Cl$_4$ with an average particle diameter of 0.3 μm was obtained.

(Evaluation of ion conductivity of solid electrolyte particle)

The ion conductivity of the produced solid electrolyte particle was measured by the same method as in Example 1. The result is shown in Fig. 6. Fig. 6 is a graph showing a relationship between the average particle diameter and the ion conductivity of solid electrolyte particles produced in Examples 5 to 8. As obvious from Fig. 6, the ion conductivity of the solid electrolyte particle Li$_3$YBr$_2$Cl$_4$ having an average particle diameter of 0.3 μm was 0.92 mS·cm$^{-1}$.

(Production of electrode material)

An active material particle Li$_4$Ti$_5$O$_{12}$ (manufactured by Toshima manufacturing Co., Ltd.) having an average particle diameter of 1.0 μm, a solid electrolyte particle Li$_3$YBr$_2$Cl$_4$ having an average particle diameter of 0.3 μm, and a vapor grown carbon fiber (VGCF (registered trademark)) as a conductive assistant were weighed at a mass ratio of Li$_4$Ti$_5$O$_{12}$ : Li$_3$YBr$_2$Cl$_4$ : VGCF = 30 : 65 : 5 in a dry argon atmosphere. On this occasion, the ratio R1 of the volume of the active material particle to the sum of the volume of the active material particle and the volume of the solid electrolyte particle was 25% when expressed as percentage. The volume of the active material particle was calculated from the bulk density of the active material particle measured in advance and the mass of the active material particle used. Similarly, the volume of the solid electrolyte particle was calculated from the bulk density of the solid electrolyte particle measured in advance and the mass of the solid electrolyte particle used. The ratio R2 of the average particle diameter of the active material particle to the average particle diameter of the solid electrolyte particle was 3.33. These materials were mixed in an agate mortar to produce an electrode material of Example 5.

The produced electrode material was observed with an SEM, and the ratio R1 and the ratio R2 were specified from the SEM image by the method described above. As a result, the values of the ratio R1 and the ratio R2 specified from the SEM image were respectively almost the same as the values of the ratio R1 and the ratio R2 specified from the active material particle and the solid electrolyte particle used as the raw materials.

(Production of secondary battery)

A battery of Example 5 was produced by the same method as in Example 1 except for using the electrode material of Example 5.

(Charge and discharge test)

The battery of Example 5 was subjected to a charge and discharge test by the same method as in Example 1.

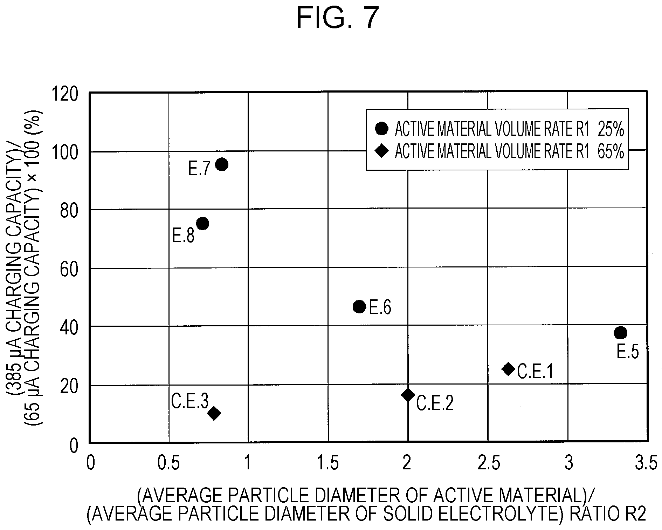

The ratio of the charging capacity when charged at 385 $\mu$A to the charging capacity when charged at 65 $\mu$A was calculated based on the results of the charge and discharge test. The result is shown in Table 2 and Fig. 7. Fig. 7 is a graph showing a relationship between the ratio R2 of the average particle diameter of the active material particle to the average particle diameter of the solid electrolyte particle and the ratio of the charging capacity at 385 $\mu$A to the charging capacity at 65 $\mu$A in Examples 5 to 8 and Comparative Examples 1 to 3. In the graph of Fig. 7, the horizontal axis indicates the ratio R2. The vertical axis indicates the result of the charge and discharge test.

[Example 6]

(Production of solid electrolyte particle)

A solid electrolyte particle $Li_3YBr_2Cl_4$ was obtained by the same method as in Example 5 except that a powder of $Li_3YBr_2Cl_4$ as a solid electrolyte was subjected to milling treatment with a bead mill using zirconia balls having a diameter of 0.5 mm at a peripheral speed of 1 m/s for 1.5 hours. This solid electrolyte particle had an average particle diameter of 0.59 $\mu$m.

(Evaluation of ion conductivity of solid electrolyte particle)

The ion conductivity of the produced solid electrolyte particle was measured by the same method as in Example 1. The result is shown in Fig. 6. As obvious from Fig. 6, the ion conductivity of the solid electrolyte particle $Li_3YBr_2Cl_4$ having an average particle diameter of 0.59 $\mu$m was 1.26 mS·cm$^{-1}$.

(Production of electrode material)

An active material particle $Li_4Ti_5O_{12}$ (manufactured by Toshima manufacturing Co., Ltd.) having an average particle diameter of 1.0 $\mu$m, a solid electrolyte particle $Li_3YBr_2Cl_4$ having an average particle diameter of 0.59 $\mu$m, and a conductive assistant VGCF were weighed at a mass ratio of $Li_4Ti_5O_{12} : Li_3YBr_2Cl_4 : VGCF = 30 : 65 : 5$ in a dry argon atmosphere. On this occasion, the ratio R1 of the volume of the active material particle to the sum of the volume of the active material particle and the volume of the solid electrolyte particle was 25% when expressed as percentage. The ratio R2 of the average particle diameter of the active material particle to the average particle diameter of the solid electrolyte particle was 1.69. These materials were mixed in an agate mortar to produce an electrode material of Example 6.

(Production of secondary battery)

A battery of Example 6 was produced by the same method as in Example 1 except for using the electrode material of Example 6.

(Charge and discharge test)

The battery of Example 6 was subjected to a charge and discharge test by the same method as in Example 1.

The ratio of the charging capacity when charged at 385 $\mu$A to the charging capacity when charged at 65 $\mu$A was calculated based on the results of the charge and discharge test. The result is shown in Table 2 and Fig. 7.

[Example 7]

(Production of solid electrolyte particle)

A solid electrolyte particle $Li_3YBr_2Cl_4$ was obtained by the same method as in Example 5 except that a powder of $Li_3YBr_2Cl_4$ as a solid electrolyte was subjected to milling treatment with a pot mill using zirconia balls having a diameter of 5 mm at 116 rpm for 50 hours. This solid electrolyte particle had an average particle diameter of 1.2 μm.

(Evaluation of ion conductivity of solid electrolyte particle)

The ion conductivity of the produced solid electrolyte particle was measured by the same method as in Example 1. The result is shown in Fig. 6. As obvious from Fig. 6, the ion conductivity of the solid electrolyte particle $Li_3YBr_2Cl_4$ having an average particle diameter of 1.2 μm was 1.34 mS·cm$^{-1}$.

(Production of electrode material)

An active material particle $Li_4Ti_5O_{12}$ (manufactured by Toshima manufacturing Co., Ltd.) having an average particle diameter of 1.0 μm, a solid electrolyte particle $Li_3YBr_2Cl_4$ having an average particle diameter of 1.2 μm, and a conductive assistant VGCF were weighed at a mass ratio of $Li_4Ti_5O_{12}$ : $Li_3YBr_2Cl_4$ : VGCF = 30 : 65 : 5 in a dry argon atmosphere. On this occasion, the ratio R1 of the volume of the active material particle to the sum of the volume of the active material particle and the volume of the solid electrolyte particle was 25% when expressed as percentage. The ratio R2 of the average particle diameter of the active material particle to the average particle diameter of the solid electrolyte particle was 0.83. These materials were mixed in an agate mortar to produce an electrode material of Example 7.

(Production of secondary battery)

A battery of Example 7 was produced by the same method as in Example 1 except for using the electrode material of Example 7.

(Charge and discharge test)

The battery of Example 7 was subjected to a charge and discharge test by the same method as in Example 1.
The ratio of the charging capacity when charged at 385 μA to the charging capacity when charged at 65 μA was calculated based on the results of the charge and discharge test. The result is shown in Table 2 and Fig. 7.

[Example 8]

(Production of solid electrolyte particle)

A solid electrolyte particle $Li_3YBr_2Cl_4$ was obtained by the same method as in Example 5 except that a powder of $Li_3YBr_2Cl_4$ as a solid electrolyte was subjected to milling treatment with a pot mill using zirconia balls having a diameter of 5 mm at 116 rpm for 6.5 hours. This solid electrolyte particle had an average particle diameter of 1.41 μm.

(Evaluation of ion conductivity of solid electrolyte particle)

The ion conductivity of the produced solid electrolyte particle was measured by the same method as in Example 1. The result is shown in Fig. 6. As obvious from Fig. 6, the ion conductivity of the solid electrolyte particle $Li_3YBr_2Cl_4$ having an average particle diameter of 1.41 μm was 1.59 mS·cm$^{-1}$.

(Production of electrode material)

An active material particle $Li_4Ti_5O_{12}$ (manufactured by Toshima manufacturing Co., Ltd.) having an average particle diameter of 1.0 μm, a solid electrolyte particle $Li_3YBr_2Cl_4$ having an average particle diameter of 1.41 μm, and a conductive assistant VGCF were weighed at a mass ratio of $Li_4Ti_5O_{12}$ : $Li_3YBr_2Cl_4$ : VGCF = 30 : 65 : 5 in a dry argon atmosphere. On this occasion, the ratio R1 of the volume of the active material particle to the sum of the volume of the active material particle and the volume of the solid electrolyte particle was 25% when expressed as percentage. The ratio R2 of the average particle diameter of the active material particle to the average particle diameter of the solid electrolyte particle was 0.71. These materials were mixed in an agate mortar to produce an electrode material of Example 8.

(Production of secondary battery)

A battery of Example 8 was produced by the same method as in Example 1 except for using the electrode material of Example 8.

(Charge and discharge test)

The battery of Example 8 was subjected to a charge and discharge test by the same method as in Example 1.
The ratio of the charging capacity when charged at 385 µA to the charging capacity when charged at 65 µA was calculated based on the results of the charge and discharge test. The result is shown in Table 2 and Fig. 7.

[Table 2]

|  | Volume ratio R1 of active material particle (%) (*1) | Ratio R2 of average particle diameter (*2) | (385 µA charging capacity)/(65 µA charging capacity) $\times$ 100 (%) |
|---|---|---|---|
| Example 5 | 25 | 3.33 | 37.19 |
| Example 6 | 25 | 1.69 | 46.44 |
| Example 7 | 25 | 0.83 | 95.30 |
| Example 8 | 25 | 0.71 | 75.10 |
| Comparative Example 1 | 65 | 2.63 | 25.01 |
| Comparative Example 2 | 65 | 2.00 | 16.28 |
| Comparative Example 3 | 65 | 0.78 | 10.47 |
| (*1) A ratio R1 of the volume of active material particle to the sum of the volume of active material particle and the volume of solid electrolyte particle<br>(*2) A ratio R2 of the average particle diameter of active material to the average particle diameter of solid electrolyte particle | | | |

[Consideration]

Figs. 4 and 6 demonstrate that the smaller the average particle diameter of the solid electrolyte particle, the lower the ion conductivity of the solid electrolyte particle.
As obvious from Tables 1 and 2 and Figs. 5 and 7, in batteries of Examples including electrode materials having a volume ratio R1 of the active material particle of greater than or equal to 10% and less than 65% and a ratio R2 of the average particle diameter of greater than or equal to 0.5 and less than or equal to 3.4, the ratio of the charging capacity at 385 µA to the charging capacity at 65 µA was high compared to Comparative Examples. This result demonstrates that according to the electrode material of the present disclosure, there is a tendency that battery input-output characteristics can be improved.
Furthermore, it is inferred from the results shown in Fig. 5 that in an electrode material having a volume ratio R1 of the active material particle of greater than or equal to 40% and less than 65% when the ratio R2 of the average particle diameter is within a range of greater than or equal to 1.5 and less than or equal to 2.9, the ratio of the charging capacity is particularly high. That is, Fig. 5 demonstrates that according to an electrode material having a volume ratio R1 of the active material particle of greater than or equal to 40% and less than 65% and a ratio R2 of the average particle diameter of greater than or equal to 1.5 and less than or equal to 2.9, the battery input-output characteristics can be more improved.

Industrial Applicability

The electrode material of the present disclosure can be used in, for example, an all-solid-state lithium-ion secondary battery. In the electrode material of the present disclosure, for example, the resistance is reduced.

Reference Signs List

| 101 | active material particle |
| 102 | solid electrolyte particle |
| 201 | positive electrode |
| 202 | electrolyte layer |
| 203 | negative electrode |
| 300 | compression molding dies |
| 301 | punch upper part |
| 302 | die |
| 303 | punch lower part |
| 1000 | electrode material |
| 2000 | battery |

**Claims**

1. An electrode material comprising:

   an active material particle; and
   a solid electrolyte particle, wherein
   the solid electrolyte particle includes Li, M, and X,
   M is at least one selected from the group consisting of metal elements excluding Li and metalloid elements,
   X is at least one selected from the group consisting of F, Cl, Br, and I,
   a ratio R1 of a volume of the active material particle to the sum of the volume of the active material particle and a volume of the solid electrolyte particle is greater than or equal to 10% and less than 65% when expressed as percentage, and
   a ratio R2 of an average particle diameter of the active material particle to an average particle diameter of the solid electrolyte particle is greater than or equal to 0.5 and less than or equal to 3.4.

2. The electrode material according to claim 1, wherein

   the ratio R1 is greater than or equal to 40% and less than 65%, and
   the ratio R2 is greater than or equal to 0.7 and less than or equal to 3.4.

3. The electrode material according to claim 1 or 2, wherein
   the ratio R1 is greater than or equal to 55% and less than 65%.

4. The electrode material according to any one of claims 1 to 3, wherein
   the ratio R2 is greater than or equal to 1.50 and less than or equal to 2.90.

5. The electrode material according to any one of claims 1 to 4, wherein
   the average particle diameter of the solid electrolyte particle is less than or equal to 1.41 $\mu$m.

6. The electrode material according to any one of claims 1 to 5, wherein
   the average particle diameter of the solid electrolyte particle is less than or equal to 1.2 $\mu$m.

7. The electrode material according to any one of claims 1 to 6, wherein
   the average particle diameter of the solid electrolyte particle is greater than or equal to 0.3 $\mu$m and less than or equal to 1.2 $\mu$m.

8. The electrode material according to any one of claims 1 to 7, wherein
   the average particle diameter of the active material particle is less than or equal to 5.0 $\mu$m.

9. The electrode material according to any one of claims 1 to 8, wherein
the average particle diameter of the active material particle is less than or equal to 2.5 $\mu$m.

10. The electrode material according to any one of claims 1 to 9, wherein

the solid electrolyte particle is represented by a following Formula (1):

$$Li_\alpha M_\beta X_\gamma \qquad \text{Formula (1)}$$

in Formula (1) above, $\alpha$, $\beta$, and $\gamma$ are each independently a value greater than 0.

11. The electrode material according to any one of claims 1 to 10, wherein
the M includes Y.

12. The electrode material according to any one of claims 1 to 11, wherein
the solid electrolyte particle includes $Li_3YBr_2Cl_4$.

13. The electrode material according to any one of claims 1 to 12, wherein
the solid electrolyte particle is substantially free from sulfur.

14. The electrode material according to any one of claims 1 to 13, wherein
the active material particle includes Li, Ti, and O.

15. The electrode material according to any one of claims 1 to 14, wherein
the active material particle includes lithium titanium oxide.

16. The electrode material according to any one of claims 1 to 15, wherein
the active material particle includes $Li_4Ti_5O_{12}$.

17. A battery comprising:

a positive electrode;
a negative electrode; and
an electrolyte layer located between the positive electrode and the negative electrode, wherein
at least one selected from the group consisting of the positive electrode and the negative electrode includes
the electrode material according to any one of claims 1 to 16.

# FIG. 1

## 1000

102

101

# FIG. 2

## 2000

201

202

203

## 1000

102

101

# FIG. 3

# FIG. 4

AVERAGE PARTICLE DIAMETER OF SOLID ELECTROLYTE/μm

# FIG. 5

# FIG. 6

# FIG. 7

## INTERNATIONAL SEARCH REPORT

| International application No. |
| --- |
| **PCT/JP2022/010447** |

| **A.** | **CLASSIFICATION OF SUBJECT MATTER** |
| --- | --- |

*H01M 4/13*(2010.01)i; *H01M 4/131*(2010.01)i; *H01M 4/485*(2010.01)i; *H01M 4/62*(2006.01)i
FI:   H01M4/13; H01M4/62 Z; H01M4/485; H01M4/131

According to International Patent Classification (IPC) or to both national classification and IPC

| **B.** | **FIELDS SEARCHED** |
| --- | --- |

Minimum documentation searched (classification system followed by classification symbols)

H01M4/13; H01M4/131; H01M4/485; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | JP 2021-012871 A (PANASONIC INTELLECTUAL PROPERTY MANAGEMENT CO., LTD.) 04 February 2021 (2021-02-04) paragraphs [0005], [0054]-[0056], [0063]-[0065] | 1-17 |
| Y | SHI, Tan et al. High Active Material Loading in All-Solid-State Battery Electrode via Particle Size Optimization. ADVANCED ENEREY MATERIALS, 07 January 2020, vol. 10, issue 1, 1902881(1-9), DOI:10.1002/aenm.201902881, First published (Online): 03 December 2019 3. Results, p. 8, left column, line 9 from the bottom to right column, line 3 | 1-17 |
| A | JP 2020-021674 A (TOYOTA JIDOSHA KABUSHIKI KAISHA) 06 February 2020 (2020-02-06) | 1-17 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 April 2022** | **17 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

| INTERNATIONAL SEARCH REPORT | | | International application No. | | |
|---|---|---|---|---|---|
| Information on patent family members | | | **PCT/JP2022/010447** | | |

| Patent document cited in search report | | | Publication date (day/month/year) | Patent family member(s) | | | Publication date (day/month/year) |
|---|---|---|---|---|---|---|---|
| JP | 2021-012871 | A | 04 February 2021 | US | 2021/0005923 | A1 | |
| | | | | paragraphs [0004], [0062]-[0064], [0071]-[0073] | | | |
| JP | 2020-021674 | A | 06 February 2020 | US | 2020/0044284 | A1 | |
| | | | | EP | 3605664 | A1 | |
| | | | | CN | 110797567 | A | |
| | | | | KR | 10-2020-0015384 | A | |
| | | | | BR | 102019015348 | A2 | |
| | | | | RU | 2713231 | C1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GERBRAND CEDER et al.** High Active Material Loading in A ll-Solid-State Battery Electrode via Particle Size Optimization. *Adv. Energy Mater.,* 2020, vol. 10, 1902881